Europäisches Patentamt

European Patent Office

Office européen des brevets

(19)

Publication number: **0 322 107**
**A2**

(12) **EUROPEAN PATENT APPLICATION**

(21) Application number: **88310958.9**

(22) Date of filing: **21.11.88**

(51) Int. Cl.⁴ **G06F 15/40**

(30) Priority: **23.12.87 US 138272**

(43) Date of publication of application:
**28.06.89 Bulletin 89/26**

(84) Designated Contracting States:
**BE CH DE ES FR GB IT LI NL SE**

(71) Applicant: **International Business Machines
Corporation
Old Orchard Road
Armonk, N.Y. 10504(US)**

(72) Inventor: **MacPhail, Margaret Gardner
2105 Tower Drive
Austin Texas 78703(US)**

(74) Representative: **Hawkins, Anthony George
Frederick
IBM United Kingdom Limited Intellectual
Property Department Hursley Park
Winchester Hampshire SO21 2JN(GB)**

(54) **Methods of ordering documents within a folder.**

(57) A method of operating an electronic information system for storing documents in folders in the system. A number of documents are identified which are to be included in a folder document. A logical relationship is then specified for the identified documents. The identified documents are then filed in the folder having the logical relationship relating to the order which the documents will be stored therein. Thereafter, the folder is filed in the information processing system.

FIG. 1

## METHODS OF ORDERING DOCUMENTS WITHIN A FOLDER

This invention relates to a method of operating an electronic information processing system and more particularly, to a method of ordering documents in folders within the system.

In recent time, automation of offices is rapidly becoming a reality for an increasing number of organizations. Office automation helps the organizations integrate data files with text, store and retrieve correspondence and reports electronically, distribute documents electronically and support the day-to-day activities of administrative personnel, professionals and managers.

While some of the benefits of electronic document processing can be realized from a single, stand-alone office system, a network which connects office systems in various locations in the organization increases the productivity of the organization. Physically, a network is a combination of interconnected pieces of equipment and programs used for moving information between points where it may be generated, processed, stored and used. From the viewpoint of an user of the network, the network is a collection of services which are useful in creating, revising, distributing, filing and retrieving documents.

In today's electronic office, documents are grouped using one of two following techniques: partition data sets and directories. Partition data sets are storage areas on a disk or other form of storage medium. Documents stored in a partition data set only exist in that storage area and a partition data can not be deleted until all of the documents included therein have been removed. Generally, the documents are filed in the partition data set in the order created and there is no other relationship regarding the order to the documents.

Directories are similar to partition data sets in that they are physical storage areas for documents for files. Documents can not exist in more that one physical storage area. The documents contained in a directory are not logically organized.

In regards to both the partition data sets and the directories, if one filed a group of documents which are related to a general topic and one wanted to review the group of documents, one would have to first locate the partition data set or sets or the directory or directories containing the documents. Moreover, in partition data sets and directories, documents have to be deleted from the bottom up. It is very hard to re-arrange the documents stored in partition data sets or directories. This type of retrieval technique reduces the efficiency of the electronic office.

Consequently, what is needed is a technique for storing documents have a logical order wherein all of the documents can be operated on with a single command and in the logical order stored.

According to the invention there is provided a method of operating an electronic information processing system in which data is stored in the form of documents and in which documents are grouped into folders, each folder having first document ordering criteria associated therewith, comprising the step of causing said to change said first ordering criteria to second ordering criteria associated with a selected folder.

There is further provided, in accordance with the invention a method of operating an electronic information processing system in which data is stored in the form of documents and the documents are grouped into folders, comprising the steps of selecting a group of documents for inclusion in a folder in accordance with first criteria and storing the selected documents in a folder in accordance with second criteria.

A preferred embodiment of the invention will now be described, by way of example, with reference to the accompanying drawings, in which:-

Fig. 1 is a block diagram of a document management system operable in accordance with the present invention;

Fig. 2 is a model of a document showing the various objects associated with the document stored in the system of Fig. 1;

Fig. 3 to 6 are object structures which are employed in generating a folder document: and

Figs. 7 to 21 are various flow charts illustrating detailed steps of a method embodying the present invention.

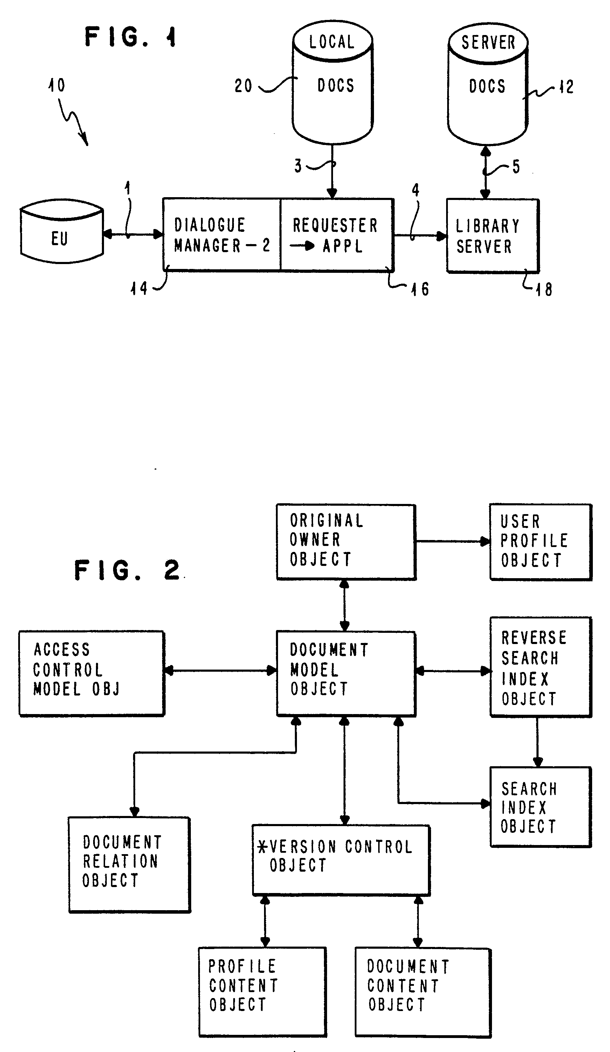

Fig. 1 shows a document management system 10 for controlling the creation, retrieval, editing and distribution of documents within an information processing system. Moreover, the document management system 10 enables an end user (EU) to store a collection of documents as a folder. In essence, the folder, which is also a document, is created and the documents which are to be stored therein are identified. The end user specifies the order which the documents will be stored within the folder. Thus, the EU creates the folder and files it into a library 12. Subsequent operations involving the folder created can be performed on the entire folder without retrieving all of the individual documents stored therein. The EU interacts with a dialog manager application 14 which provides all of th data or screens necessary to create the folder with the documents. For example, the dialog manager application will present a screen which request the EU to enter any access control for the folder, any contextual-search characteristics, the identification of a requester/principle of the folder, and the definition of the folder. The definition of the folder includes an ordering criteria for the documents to be included in the folder, an indication that a document is included in a particular folder, any document-in-folder attributes of the document to be filed including whether or not history is to be maintained on the document and any pointers or addresses of the physical location of all of the documents to be filed in the folder. These documents can be directly accessible to a requester application program 16 or accessible to the requester's library server 18. After the dialogue manager application 14 has gathered the above-identified information, it transmits the information to the requester application program 16.

The requester application application program 16, in response to input from the dialogue manager application 14, builds a request in the form of a file and transmits the request to the library server 18. The requester application program 16 makes a copy of each of the documents identified by the EU which are accessible in a local storage medium 20. The copies of the documents are transmitted to the library server 18 along with the request. Additionally, the requester application program 16 transmits pointers to the physical location of all of the documents to be filed. All of the documents in the local storage medium 20 will be transmitted with the request. The requester application program 16 also transmits pointers to other documents to be filed which are accessible to the library server 18 on the server storage medium or library 12.

The library server 18 files the folder into the server storage medium 12 as specified by the EU. Access control will be established and any contextual-search characteristics will be enabled as specified. The documents transmitted with the folder request will be filed with the appropriate access control and contextual-search characteristics. Data objects associated with the folder document will be established to reflect the ordering criteria and the order of the documents filed in the folder. The history attributes for the folder document will be established and any history attributes for any of the documents filed therein will be established. Thereafter, the data objects associated with the documents contained in the folder document will be set to reflect that the document is contained within the folder document.

The document management system 10 shown in Fig. 1 utilizes a uniform structure for exchanging information within the system. This structure includes an encoding scheme which is designed to convey any document, irrespective of it content, from one type of office system to another and to communicate the intent of the person creating or transmitting a document as to the method of processing thereof. One type of structure which meets all of these requirements is the Document Interchange Architecture (DIA) which is a part of the DISOSS office system marketed by the International Business Machines Corporation.

DIA is a program-to-program communication architecture which defines the protocols and data structures that enable programs to interchange information such as documents and messages in a consistent and predictable manner. DIA is independent of the type of information managed by DIA services. DIA includes documents objects which contain parameters or descriptors that describe the contents of the information being transmitted. The descriptors contained in the objects include the name under which the information is to be filed, the authors, the subject of the information and the date the information was filed in the document history. These descriptors enable a document to be searched in a storage medium such as the server library 12.

The server library 12 performs various services for the system 10. These services are used for storing and retrieving documents electronically. Whenever a document is filed in the server library 12, a set of descriptors called a document profile is filed with it. The profile contains the descriptors noted above. Document profiles are used in searching for documents in the library 12. For purposes of illustration and not limitation, a EU can ask the system 10 to search for all documents regarding a particular subject and by a certain author which was filed in the library 12 between any two dates. Upon completing the search, the system presents the EU with a list of the documents which meet the search criteria. The EU could then ask the system 10 to retrieve a copy of a specific document on the list from the library an deliver the copy the EU for printing or viewing.

The server library 12 also provides the following services: file documents in and retrieve or delete documents from the library; update work in progress documents in the library; specify a security level to associate with the document that is being filed; allow authorized end users other than the EU who filed the document to retrieve the document from the library and perform searches for and retrieve documents in the library for other end users. The server library 12 assigns each new document filed in therein a unique name called a library-assigned document name (LADN). This name is returned to the requester and can be used to uniquely identify the document at some later time.

Referring to Fig. 2, each document stored in the server library 12 includes the objects shown therein. All of the objects shown in Fig. 2 are created in response to the processing a FILE command. A document model object contains information concerning ownership and attributes of a specific document. This object controls the access to the document during its life in the library.

An original owner object contains or points to information used by an owner of the document to control access to the document as filed.

A document content object provides for the storage of the document content and for saving information relating to the actual size of the filed document.

A document relation object describes the logical relationships between the document and other documents. If the document is a folder, each of the documents contained therein has a pointer or LADN entry in this object. If this document is in one or more folders, then each folder has a pointer or LADN entry in this object. Enter and remove history may be maintained for the document either as a folder or as a document in other folders.

An access control model object is created when the document owner authorizes other users to access the document.

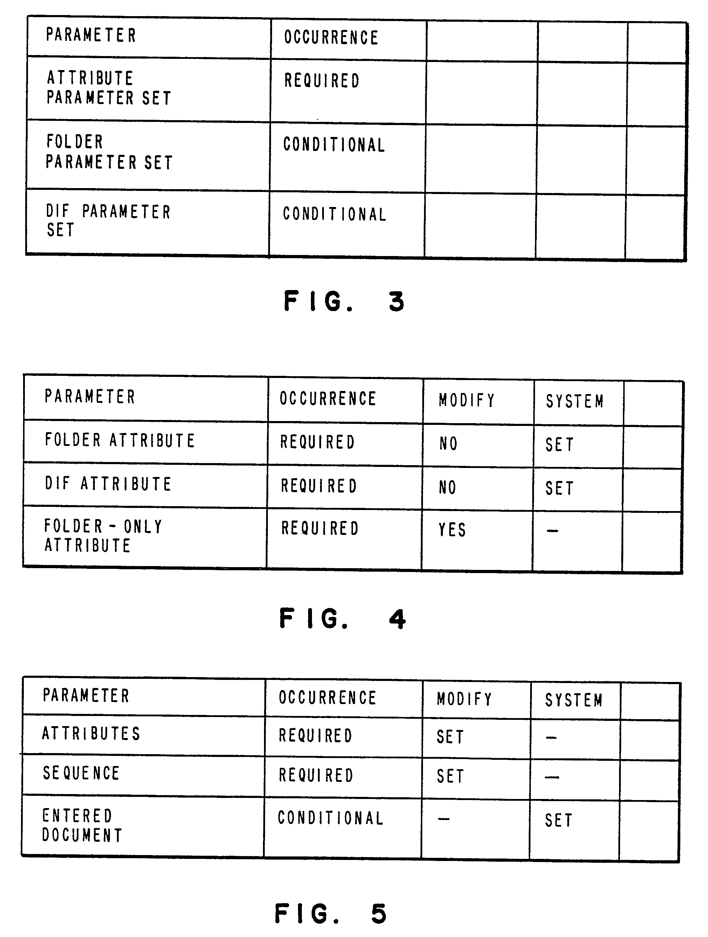

Structures for all of the above-identified objects except document relations object are a part of the DISOSS office system and will not be described herein. Fig. 3 shows the structure of the document relation object which consists of the following: an attribute parameter set and a folder document section, a document-within-a-folder section.

The attribute parameter set indicates whether or not the document associated with the document relation object is a folder or whether or not the document is a 'folder-only' document. Fig. 4 illustrates the structure for the attribute parameter set. A folder attribute indicates whether or not the document associated with the document relation object is a folder. If the document is a folder, then a folder section parameter set is required. A DIF (document in folder) attribute indicates whether or not the document is contained within any folders. A folder-only attribute indicates whether or not the document can be viewed as existing on its own when it is included within a folder. Documents are viewed as folder-only when both the DIF and Folder-only attributes are positively set.

A physical document in a physical folder is a folder-only document. In essence, the physical document exists in the folder and can not stand on its own. However, electronic documents can logically exist in multiple places at the same time. Therefore, a document can appear to be in more than one folder and standing on its own all at the same time. Whether or not the document can stand on its own when it is also in a folder is indicated by the folder-only attribute. Folder-only documents are viewed as stand-alone when they are not contained by any folders.

The folder document section includes the following sections: folder attributes and entered document parameters set. The folder attributes indicates the folder characteristics such as ordering criteria and history. Each document entered into the folder document associated with the document relation object will have an entered document parameter set. Fig. 5 illustrates the structure for the folder document section. The attributes parameter allows for the specification of an open option and the history option. The folder is open so that documents can be entered into or removed from the folder after it has been filed in the server library 12. As documents are entered into and removed from the open folder, the history option is specified by an entered document parameter. The entered document parameter is deleted when a document is removed from the folder and is created when the same document is reentered into the folder. The removal data and time and the requester's ID are added to the entered document parameter set. When the document is re-entered into the folder, the date and time and the requester's ID is added to the entered document parameter set. Thus, the attribute parameter specifies the following folder characteristics: open or closed and history or no history. Folders with the option can have documents entered and removed. Folders with the closed option can not have documents entered or removed. Open folders with the history option will have a history in the Entered Document parameter set for those documents subsequently removed from or re-entered into the folder. Open folders with "no history" option have the Entered Document parameter set deleted when the document is removed from the folder and created when the document is subsequently re-entered.

The sequence option specifies how the documents within a folder are to be ordered and the manner the order is to be maintained as documents are entered into the folder. When a folder is distributed or retrieved, the order in which the contained documents are sent is the order specified by the sequence parameter set. The contained documents can be ordered by the user by position when filed and entered or by profile parameters either in ascending or descending order.

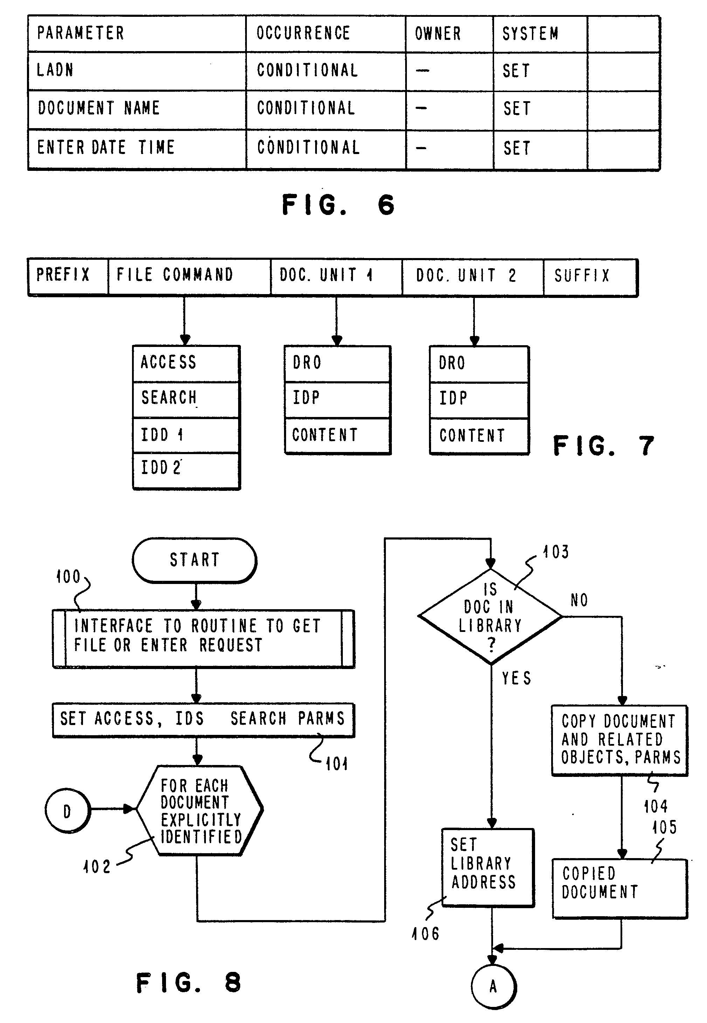

Fig. 6 shows the structure for the Entered Document parameter. The Entered Document parameter includes a LADN of each document entered into the folder, the user-assigned document name of the document entered into the folder, and the date and time that the document was entered into the folder or removed from the folder.

Fig. 7 shows a structure for a file command used in creating the folder in the information processing system. The file command includes a file command section and at least one document unit section. The file command section includes information relating to any access and search criteria entered by the EU. For purposes of illustration and not limitation, the file command structure includes two document unit sections. Each of the document unit sections is associated with respective documents to be included in the folder. Thus, the number of the documents unit sections will vary depending on the number of documents to be included in the folder. Similarly, the file command section includes two identified data (IDD) operands. An IDD1 operand is associated with the first document, the folder, specified by the EU. The IDD1 operand includes a unique identifier for the folder within the context of the command and a physical pointer which points to document unit 1. An IDD2 operand is associated with the second document specified by the EU to be included in the folder. Similarly, the IDD2 operand includes a unique identifier for the second document within the context of the command, an indicator that the second document is to be entered into the folder document represented by IDD1 and a physical pointer which points to document unit 2. Document unit 1 includes a document relation object (DRO). The DRO includes any relation attributes, folder attributes, a folder table-of-contents framework which is empty if the folder is being created, and a document-in-folder table-of-contents framework which is also empty if the folder is being created. Document unit 1 further includes an interchange document profile (IDP) which contains descriptive information regarding the document. Document unit 2 includes also a DRO and an IDP. The DRO associated with document unit 2 includes relation attributes and a document-in-folder table-of-contents framework.

Set out below is an illustration of an application program useable by the requestor application in filing a folder in the information processing system. The program is in program design language from which source code and machine code are derivable.

```
REQUESTER PROC
        INPUT
                ACCESS CONTROL INFORMATION
                CONTEXTUAL-SEARCH CHARACTERISTICS
                DO FOR EACH DOCUMENT SPECIFIED IN THIS
                        REQUEST

                        A POINTER TO THE PHYSICAL DOCUMENT
                        (PPTR) WHICH WILL BE THE LOCAL POINTER
                        OR THE LIBRARY IDENTIFIER.

                        A UNIQUE IDENTIFIER FOR THIS DOCUMENT
                        WITHIN THE SCOPE OF THIS REQUEST (DID).

                        A REFERENCE IDENTIFIER FOR EACH FOLDER
                        CONTAINING THIS DOCUMENT, IF THIS
                        DOCUMENT IS TO BE INCLUDED WITHIN A
                        FOLDER (RID).

                        A POSITION INDICATOR FOR THE POSITION
                        THIS DOCUMENT WILL TAKE IN THE
                        REFERENCED FOLDER, IF THIS DOCUMENT IS
                        TO BE INCLUDED WITHIN A FOLDER (POS).

                        ORDERING CRITERIA IF THE SPECIFIED
                        DOCUMENT IS A FOLDER TO BE CREATED WITH
                        THIS INPUT.
                ENDDO
        PROCESS
                SET THE ACCESS CONTROL
                SET THE CONTEXTUAL-SEARCH CHARACTERISTICS
                DO FOR EACH DOCUMENT (IDD OR RDD) EXPLICITLY
                        SPECIFIED IN THE REQUEST
                                IF THE DOCUMENT DOES NOT EXIST IN
                                        THE LIBRARY,
```

6

```
THEN
     COPY THE DOCUMENT.

     SET THE DOCUMENT
     ADDRESS TO POINT TO THE
     POSITION OF THE DOCUMENT
     IN THE REQUEST UNIT.

     SET UP THE DATA OBJECT
     (DRO) WHICH WILL CONTAIN
     THE UNIQUE LIBRARY
     IDENTIFIER FOR THE
     FOLDERS WHICH CONTAIN
     THIS DOCUMENT.

     SET THE DOCUMENT-IN-
     FOLDER ATTRIBUTES
     (HISTORY) IN THE DRO AS
     SPECIFIED.

IF THE DOCUMENT IS A FOLDER,
  THEN
     SET THE FOLDER
     ATTRIBUTES (HISTORY,
     ORDER, OPEN) IN THE DRO
     AS SPECIFIED.

     SET UP THE DATA OBJECT
     WHICH WILL CONTAIN THE
     UNIQUE LIBRARY
     IDENTIFIERS FOR THE
     DOCUMENTS CONTAINED
     WITHIN THIS FOLDER.
  ENDIF
ENDIF
```

```
                    SET SPECIFIED IDENTIFIER FOR THIS

                         DOCUMENT (DID).

                    SET SPECIFIED REFERENCES FOR THIS

                         DOCUMENT (RIDs).

                    SET SPECIFIED POSITION FOR THIS

                         DOCUMENT CORRESPONDING TO THE

                         APPROPRIATE RID (POSs).

              ENDDO

          END REQUESTER PROC
```

When the requester application program 16 receives data from the dialogue manager 14, it builds operands specifying the access contextual-search characteristics, requester and principal identifiers for all of the documents filed with this request. For each document passed with the request, an IDD operand is built. If the document presently exist in the library 12, only the RDD operand is built. Both operands include the following: a pointer (PPTR) to the physical location of the document wherein the RDD will contain a library pointer and the IDD will contain a pointer to the local storage medium 20 contained within the request: a unique document identifier within the scope of the command (DID); references to the folder or folders containing each of the documents (RID = DID of the folder); and positions (POS) for each of the documents within the referenced RID folders. The requester application program 16 then builds the IDD operand for each new document. Data areas associated with each of the documents are then built and included in the DRO. The DRO contains the ordering criteria for the folder, other folder attributes, and a list of documents contained within the folder (DIFTOC). Additionally, the DRO contains the history attribute for the documents contained within the folder. A document-in-folder table of contents (DIFTOC) contains the data for the documents contained in the folder.

Set out below is an illustration of an application program useable by the library server 18 in filing a folder in the information processing system. The program is in program design language from which source code and machine code are derivable.

```
BEGIN LIBRARY SERVER PROC
        INPUT
                ACCESS CONTROL INFORMATION FROM REQUESTER
                APPLICATION.
                CONTEXTUAL-SEARCH INFORMATION
                REQUESTER/PRINCIPLE IDENTIFIERS.
                DO FOR EACH DOCUMENT SPECIFIED IN THIS
                        REQUEST BUILD AN IDD OPERAND OR A RDD
                        OPERAND WHICH INCLUDES:
                        A POINTER TO THE PHYSICAL DOCUMENT
                        (PPTR) WHICH WILL BE EITHER THE LOCAL
                        POINTER (IDD OPERAND) OR THE LIBRARY
                        IDENTIFIER (RDD OPERAND).


                        AN UNIQUE IDENTIFIER FOR THIS DOCUMENT
                        WITHIN THE SCOPE OF THIS REQUEST (DID).


                        A REFERENCE IDENTIFIER FOR EACH FOLDER
                        CONTAINING THIS DOCUMENT, IF THIS
                        DOCUMENT IS TO BE CONTAINED WITHIN A
                        FOLDER (RID).


                        A POSITION INDICATOR FOR THE POSITION
                        THIS DOCUMENT WILL TAKE IN THE
                        REFERENCED FOLDER, IF THIS DOCUMENT IS
                        TO BE CONTAINED WITHIN A FOLDER (POS).


                        A DOCUMENT RELATION OBJECT (DRO)
                        CONTAINING THE FOLLOWING:
                                DOCUMENT RELATION ATTRIBUTE.
                                ORDERING CRITERIA AND OTHER FOLDER
                                ATTRIBUTES, IF THE SPECIFIED
                                DOCUMENT IS A FOLDER TO BE CREATED
                                WITH THIS REQUEST.
                                DOCUMENT-IN-FOLDER ATTRIBUTES.
```

```
                   A DOCUMENT-IN-FOLDER

                   TABLE-OF-CONTENTS (DIFTOC) AREA

                   WHICH WILL BE SET UP BUT WILL NOT

                   CONTAIN ANY ENTRIES.

                   A FOLDER TABLE-OF-CONTENTS (FTOC)

                   AREA WHICH WILL BE SET UP BUT WILL

                   NOT CONTAIN ANY ENTRIES.

          ENDDO

     PROCESS

          CALL BUILD TABLE PROC FOR DID/LADN AND

          RID/DID TABLES.

          DO FOR EVERY FOLDER (RID ENTRY):

               GET THE ORDERING CRITERIA FOR THIS

                    FOLDER INCLUDING COLLATING ORDER

                    (CODE PAGE LISTS).


               IF THE FOLDER IS ORDERED EXPLICITLY BY

                    POSITION, THEN

                         CALL FOLDER ORDERED BY

                              POSITION ROUTINE

                    ELSE

                         CALL FOLDER ORDERED BY

                              DESCRIPTORS ROUTINE

               ENDIF

          ENDDO

     END PROCESS

     END LIBRARY SERVER PROC
```

As noted above, each document operand (RDD or IDD) has the unique identifier (DID) assigned thereto. The library server 18 then gets a LADN for every document explicitly specified in the request. A BUILD TABLE PROC is called to build a temporary table to match every DID to an associated LADN. Moreover, each document operands which corresponds to a document that will be placed into the folder includes a reference (RID) to the folder's unique document identifier DID. The RID with the document operand is set to the value of the folder operand's DID. The library server 18 then facilitates the building of a temporary table containing an entry for every folder referenced. Each folder entry will contain a list of DIDs representing the documents which are included within the folder. Each DID will be associated with an operand number (OPN) and a position (POS) in the folder. OPN is calculated by the library server since the original order of the operands may be used to determine the position of the documents within the folder if the POS value is not explicitly set by the requester application program 16.

For purposes of illustration and set forth in the table below, a folder with a DID of 1 contains two documents with DIDs of 2 and 3 in that order. A folder with DID of 4 contains two documents with DIDs of 2 and 5 in that order. The document operand for the DID = 2 document contains 2 RIDs. One for the folder defined with the document operand associated with DID = 1 and another for the folder associated with DID = 4. Additionally, the document operands are in the same order as the DID specification. The library server 18 processes the RID/DID table one RID (folder) at a time.

| RID | DID/POS/OPNs | |
|---|---|---|
| 1 | 2/1/2 | 3/2/3 |
| 4 | 2/1/2 | 5/2/5 |

The library server 18 gets the appropriate folder ordering data from the DRO data area associated with the current folder to be processed. The RID value in the document's operand corresponds to the folder operand's DID value. The library server 18 uses the DID value to find the LADN in the temporary table. The LADN is used to access the data areas associated with the folder which contains the ordering criteria and the character translation code page lists. Each folder's DRO contains the ordering criteria and the code page lists for the folder. In addition, the folder containing this document has a folder-table-of-contents (FTOC) in its DRO. The FTOC has an entry for every document the folder contains. The order of the documents contained within the folder is the order of the documents' entries in the FTOC. The DRO associated with the document contains an entry for each folder that contains this document (DIFTOC).

Set out below is an illustration of an application program useable by the library server 18 in building the DID/LADN and RID/DID tables. The program is in program design language from which source code and machine code are derivable.

```
BEGIN BUILD TABLES PROC
        SET OPN TO A VALUE OF 1
        DO FOR EACH DOCUMENT SPECIFIED IN THE REQUEST:
                IF THE DOCUMENT DOES NOT EXIST IN THE
                LIBRARY,
                    THEN
                        COPY THE DOCUMENT AND ITS RELATED
                        OBJECTS INTO THE LIBRARY.
                        ASSIGN A UNIQUE LIBRARY IDENTIFIER TO
                        THIS DOCUMENT (LADN).
                        ELSE
                            OBTAIN THE UNIQUE LIBRARY
                            IDENTIFIER FOR THIS DOCUMENT
                            (LADN).
                ENDIF
                SAVE THE UNIQUE IDENTIFIER FOR THE REQUEST
                (DID) WITH THE UNIQUE LIBRARY IDENTIFIER
                (LADN) IN DID/LADN TABLE.
                DO FOR EACH FOLDER REFERENCED (RID) BY THIS
                   DOCUMENT OPERAND:
                        IF THERE IS NO ENTRY IN THE RID/DID
                           TABLE,
                            THEN CREATE AN ENTRY FOR THIS RID
                        ENDIF
                        SET DID IN RID/DID TABLE
                        IF POS IS SET, THEN
                                SET POS IN RID/DID TABLE
                                    ELSE, SET POS = HIGHEST POSSIBLE


                                    VALUE + 1 IN RID/DID TABLE
                        ENDIF
                        SET OPN IN RID/DID TABLE
                ENDDO
                SET OPN TO OPN + 1
        ENDDO
END BUILD TABLE PROC
```

The library server 18 must keep track of the order in which document operands are specified. In positionally ordered folders wherein the position is not specified, the original operand order is the order in which the documents are placed in the folder. The library server 18 then builds an entry in the temporary table for every document specified in the IDD or RDD operand. Each entry matches a DID to a LADN. In addition, if the current document operand references a folder in which it will be included, the RID/DID temporary table is updated. The library server 18 then process the IDD if the document does not exist in the library 12. The document is then filed in the library 22 along with its associated data areas which includes the DRO and assigns a new LADN to the document. Thereafter, the library server 18 process the RID if the document does exist in the library 12 and builds the DID/LADN and the RID/DID entries in the temporary table. Document operands without a POS set that are placed in positionally ordered folders, go into the folder after the last document currently in the folder. The OPN is then updated for the next operand.

Set out below is an illustration of an application program useable by the library server 18 in ordering the documents contained within the folder by position. The program is in program design language from which source code and machine code are derivable.

```
BEGIN ORDER BY POSITION PROC

         SORT THE DID SUB-ENTRIES OF THE RID/DID TABLE SO

         THAT THEY ARE ORDERED IN ASCENDING ORDER BY POS

         VALUE, THEN ORDERED BY OPN VALUE WITH THE SAME


         POS VALUE.

         DO FOR EACH DID SPECIFIED:

              IF ANOTHER DOCUMENT IS CURRENTLY AT THE

                   POSITION SPECIFIED WITHIN THE FOLDER,

                   THEN

                        MOVE ALL OF THE DOCUMENTS AT AND

                        AFTER THE POSITION SPECIFIED DOWN

                        ONE POSITION.


                        SET THE DOCUMENT'S FOLDER POSITION

                        TO THE POSITION SPECIFIED

                        (FPOS=POS).

                   ELSE

                        SET THE DOCUMENT'S FOLDER POSITION

                        (FPOS) TO CORRESPOND TO THE

                        POSITION JUST AFTER THE LAST

                        DOCUMENT CURRENTLY IN THE FOLDER.

              ENDIF

         ENDDO

END ORDER BY POSITION PROC
```

The order by position routine process all DIDs for the folder and each document to be placed in the folder. Either a document is presently at the position specified or the document will be placed at the end of the folder. Placing the document in the position specified results in the document currently at that position as well as those following that position must be move one position. If the document did not have explicit position specified with the original operand or the specified position is greater than that of any current document, the document will be placed at the end of the folder.

Set out below is an illustration of an application program useable by the library server 18 in ordering the documents contained within the folder by descriptors. The program is in program design language from which source code and machine code are derivable.

```
BEGIN ORDER BY DESCRIPTORS PROC
    DO FOR EACH DID SPECIFIED:
        IF THIS IS THE FIRST DOCUMENT IN THE FOLDER,
            THEN
                SET THE POSITION VALUE TO CORRESPOND TO
                THE FIRST DOCUMENT IN THE FOLDER
                (FPOS=1).
            ELSE
                IF THIS DOCUMENT (DID) HAS A UNIQUE SET
                    OF FOLDER ORDERING DESCRIPTORS, THEN
                        IF THE FIRST UNIQUE FOLDER
                            ORDERING DESCRIPTOR IS IN
                            ASCENDING ORDER, THEN
                                SET THIS DOCUMENT'S (DID)
                                POSITION (FPOS) (1) AFTER ANY
                                DOCUMENTS WITH EQUAL PREVIOUS
                                DESCRIPTORS VALUES, IF ANY,
                                AND A LESSER DESCRIPTOR VALUE
                                AND (2) BEFORE ANY DOCUMENTS
                                WITH EQUAL PREVIOUS
                                DESCRIPTOR VALUES, IF ANY,
                                AND A GREATER DESCRIPTOR
                                VALUE THAN THIS DOCUMENT'S
                                (DID) FIRST UNIQUE VALUE.
                        ELSE
                                SET THIS DOCUMENT'S (DID)
                                POSITION (FPOS) (1) AFTER ANY
                                DOCUMENTS WITH EQUAL PREVIOUS
                                DESCRIPTOR VALUES, IF ANY,
                                AND A GREATER DESCRIPTOR
                                VALUE THAN THIS DOCUMENT'S
                                (DID) FIRST UNIQUE DESCRIPTOR
                                VALUE AND (2) BEFORE ANY
                                DOCUMENTS WITH EQUAL PREVIOUS
                                DESCRIPTOR VALUES, IF ANY,
```

```
                           AND A LESSER DESCRIPTOR VALUE

                           THAN THIS DOCUMENT'S (DID)

                           FIRST UNIQUE DESCRIPTOR

                           VALUE.

                     ENDIF

               ELSE

                     SET THIS DOCUMENT'S (DID) POSITION

                     (FPOS) TO BE AFTER THE LAST

                     DOCUMENT IN THE FOLDER WITH A SET

                     OF DESCRIPTOR VALUES EQUAL TO THIS

                     DOCUMENT'S SET OF DESCRIPTOR

                     VALUES.

               ENDIF

          ENDIF

     ENDDO

END ORDER BY DESCRIPTOR PROC
```

The order by descriptors routine processes each document to be placed into the current folder. If this is the first document to be placed in the folder, then the document will be assigned to the first position in the FTOC. As other documents are added, this document's position may change.

The library server 18 must find the proper position for the document in the folder. The folder will have one or more sets of descriptors to use in ordering the document. The library server 18 processes the descriptors and compares the document's descriptors with those contained in the folder. Either the document's descriptors will give the document a unique position in the folder or the document descriptors will equal one or more of the other documents' descriptors in the folder. If the folder does not have a unique position, then will be placed after the last document with descriptors equal to its descriptors. If a document is missing a descriptor, the document's descriptor is assumed to have the highest possible collating value.

If the document has a unique set of descriptors, then its position will be determined by its first unique descriptor within the folder ordering descriptors. If this folder's primary ordering criteria is ascending by author, then within author ascending by subject, then the library server 18 looks first for a unique author value. If the author value is not unique, then the library server 18 looks for a unique subject value. Documents within the folder with the same author will be ordered by subject.

If the unique descriptor's order is ascending, then the document is placed among the documents with equal previous order descriptors according to the ascending order comparison with this document's unique descriptor value.

If the unique descriptor's order is descending, then the document is placed among the documents with equal previous order descriptors according to the descending order comparison with the document's unique descriptor value.

Set out below is an illustration of an application program useable by a character translation routine called the library server 18 in ordering the documents contained within the folder by descriptors. The program is in program design language from which source code and machine code are derivable.

```
BEGIN CHARACTER TRANSLATION PROC
    SET THE NEXT CODE PAGE POINTER (NCPTR) TO THE
    FIRST CODE PAGE IN THE FOLDER'S COLLATING LIST.
    DO UNTIL ALL OF THE CODE PAGES IN THE FOLDER'S
        COLLATING LIST HAVE BEEN USED OR UNTIL ALL
        OF THE CHARACTERS IN THE FIELD HAVE BEEN
        TRANSLATED.
            USING THE NCPTR, TRANSLATE ALL OF THE
            REMAINING CHARACTERS IN THE DOCUMENT'S
            FILED THAT CAN BE TRANSLATED.


    ENDDO
END CHARACTER TRANSLATION PROC
```

The library server 28 uses the folder's collating code pages list to translate the character data. The library server translates each of the characters on the code page list in sequential order until all of the character data is translated or until all of the code pages have been processed. Untranslatable code pages are left as is and are placed at the end of the collating sequence. The untranslatable code pages are then collated according to their code page identifiers.

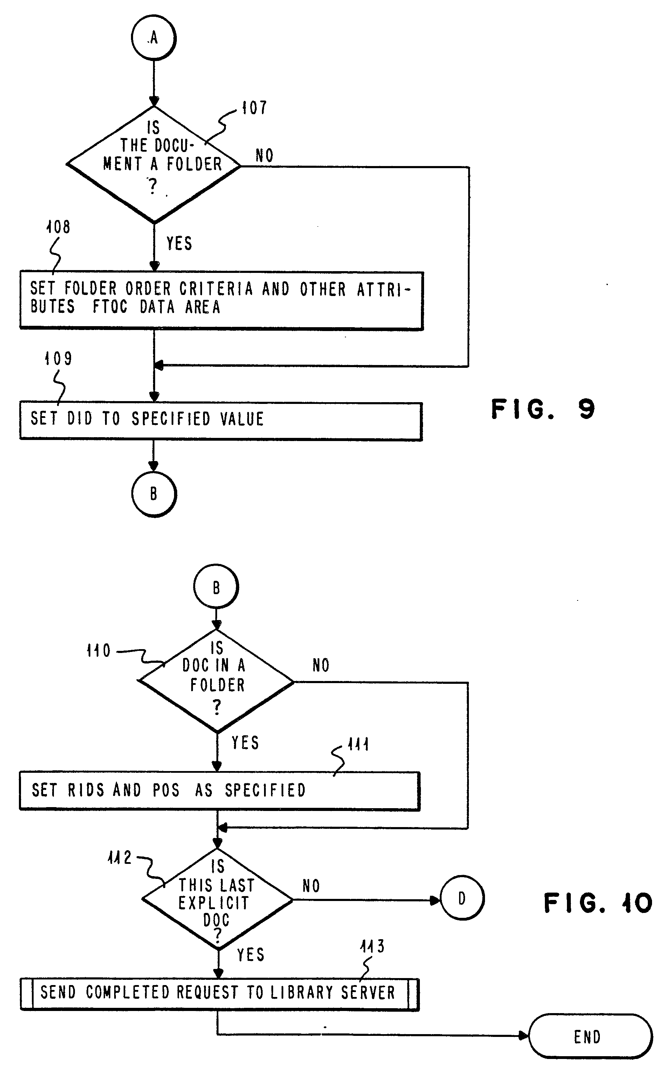

Figs 7, 8 and 9 show a flow chart for the requester application program 18 in filing a folder in the information processing system. First, the application program 18 in step 100 interfaces with the dialogue manager to get the request. The access information, identifiers and search parameters are set in step 101. In steps 102 and 103, a determination is made whether each of the documents specified in the request exist in the library 12. If the documents do not exist in the library 12, a copy of the document and its related objects is made in steps 104 and 105. If the documents exist in the library 12, the library address is set in step 106. Step 107 determines whether each of the specified documents is a folder. Step 108 sets the folder order criteria and other folder attributes and the DID is set to a specified value in step 109. If a specified document in step 107 is not a folder, the DID is set to a specified value in step 109. In step 110, a determination is made whether each of the documents are included in an existing folder. If the document id a folder, the RIDs and POS are set in step 111 otherwise, control is transferred to step 112. In step 112, a determination is made whether the document is the last document specified in the request. If there are other documents to be processed, control is transferred to step 102. Otherwise, the requester application program 16 transmits the complete request to the library server 18 in step 113.

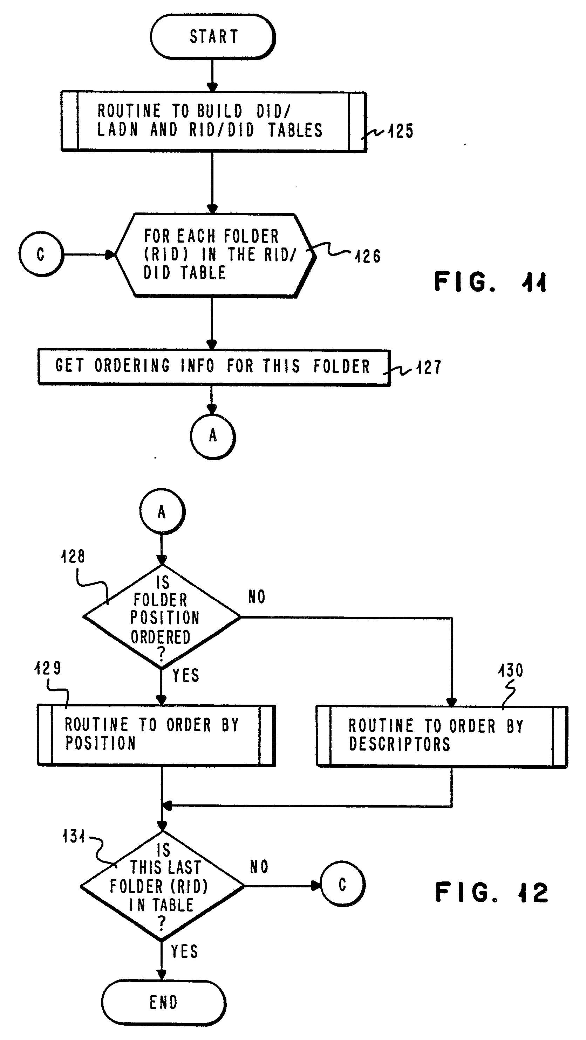

Referring to Figs. 10 and 11, there is illustrated a flow chart for the library server 18 in filing the folder in the library 12. In step 125, the library 18 server call the build tables routine to build the DID/LADN and RID DID tables. In steps 126 and 127, for each folder RID get ordering information for the folder. In step 128, if a folder is position ordered, an order by position routine is called in step 129 to arrange the documents in the folder by position. If the folder is not position ordered, an order by descriptor routine is called in step 130 to arrange the documents included in the folder by descriptors associated with each of the documents. Step 131 determines if the last folder in the table has been processed. If there are other folders in the table to be processed, control is transferred to step 126.

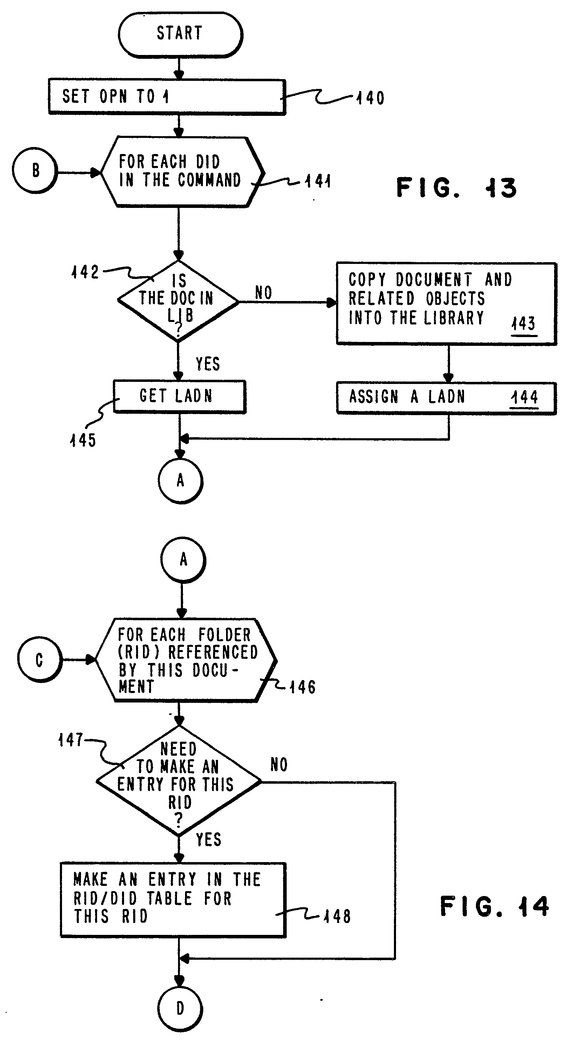

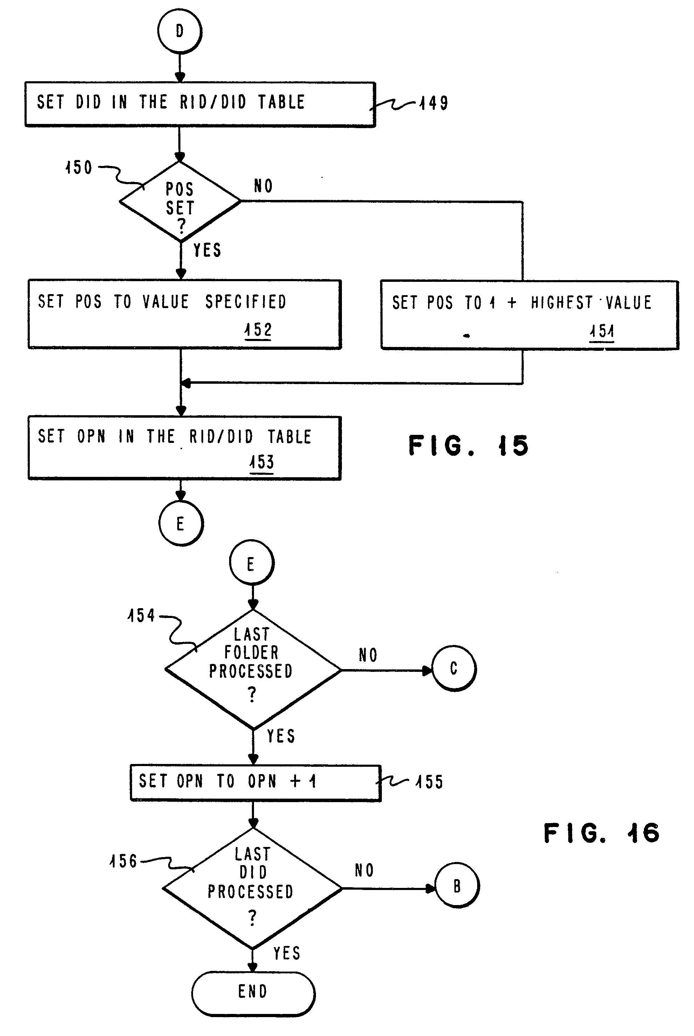

Referring to Figs. 12 through 15, there is illustrated a flow chart for the build table routine in generating the RID DID and DID/LADN tables. As noted above, the build table routine is called by the library server 18. In step 140, the OPN is set to a value of one. For each DID in the call, a determination is made in steps 141 and 142 whether the document associated with each respective DID exists in the library 12. If the document is not in the library, a copy of the document and its related objects is made in step 143 and a LADN is assigned in step 144. Otherwise, the LADN for the document filed in the library 12 is fetched in step 145. For each folder RID referenced by the document, in steps 146 and 147, a determination is made as to whether an entry has to be made in the RID/DID table. An entry is made in the RID/DID table in step 148 if required. The DID is entered in the RID/DID table in step 149 and a determination is made in set 150 as whether the position indicator (POS) has been set. The POS is set to a value of one plus the highest possible value in the RID/DID table in step 151. If the POS has been previously specified, POS is set to the value specified in step 152. The document operand OPN is then set in the RID/DID table in step 153. In step 154, a determination is made whether the last folder has been processed. Control is transferred from step 154 to step 146 to process any remaining folders. Otherwise, OPN is incremented by a value of one in step 155. Step 156 determines whether the last DID has been processed. Control is transferred from step 156 to step 141 to process any remaining DIDs.

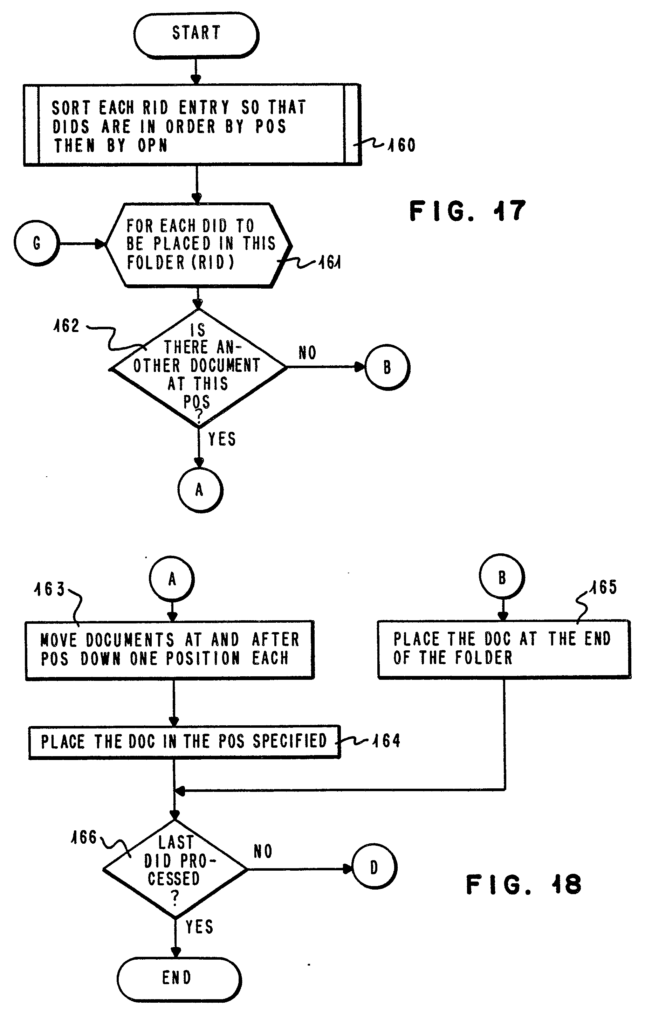

Referring to Figs. 16 and 17, there is shown a flow chart for the order by position routine which called by the library server 18. In step 160, each RID entry is sorted so that the DID entries are ordered in ascending order by POS value and then by OPN value with the same POS value. Steps 161 and 162 determine whether a document associated with a specified DID presently exists in a specified position in the folder. If there is a document in the specified position, the document and all of the documents following in subsequent ascending order are moved one position in step 163 and the document associated with the specified DID is placed in the specified position. Otherwise, the document associated with the DID is placed at the end of the folder in step 165. Step 166 determines whether all of the DIDs have been processed. If there are other DIDs to be processed, control is transferred from step 166 to step 161 for further processing.

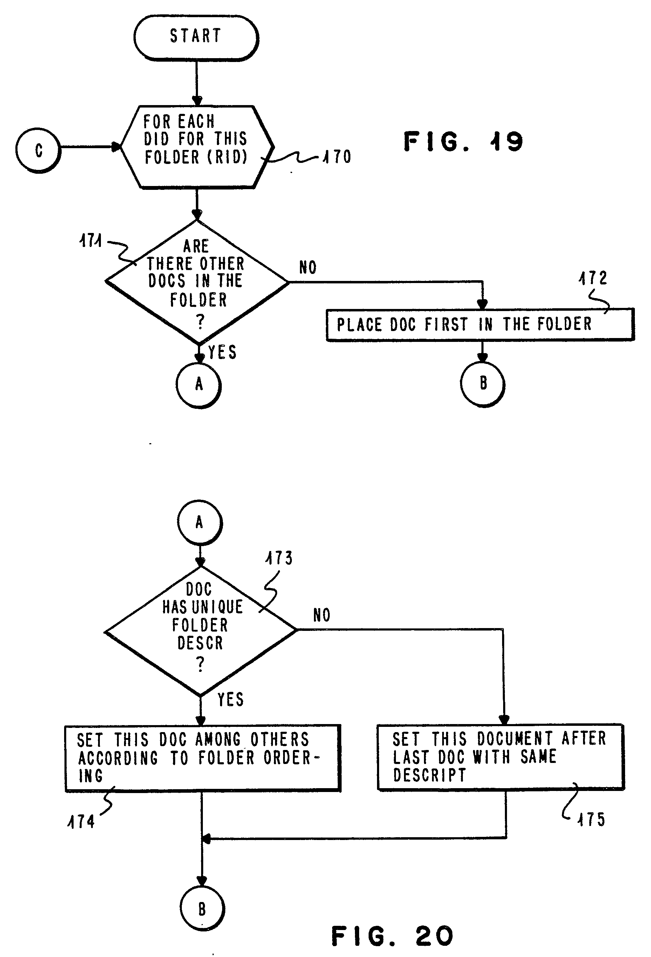

Referring to Figs. 18, 19 and 20, there is shown a flow chart for the order by descriptor routine which is also called by the library server 18. In steps 170 and 171, a determination is made for each DID in the folder whether there are other documents therein. If there are other documents in the folder, step 173 determines whether a selected document has any unique folder descriptors. The unique folder descriptors are then compared to the documents in the folder and in step 174, the document is then placed in the folder where its descriptors are equal or exceed those associated with the other documents in the folder. If there are no unique descriptors, the document, in step 175, is placed in the folder after the last document having the same descriptors. If, in step 171, it was determined that there were no other documents in the folder, the documents is placed in the first position in the folder in step 172 and control is transferred from step 172 to step 176. Step 176 determines whether all of th documents which are to be included in the folder have been placed therein. If there are other documents to be placed in the folder, control is transferred from step 176 to step 170 for further processing.

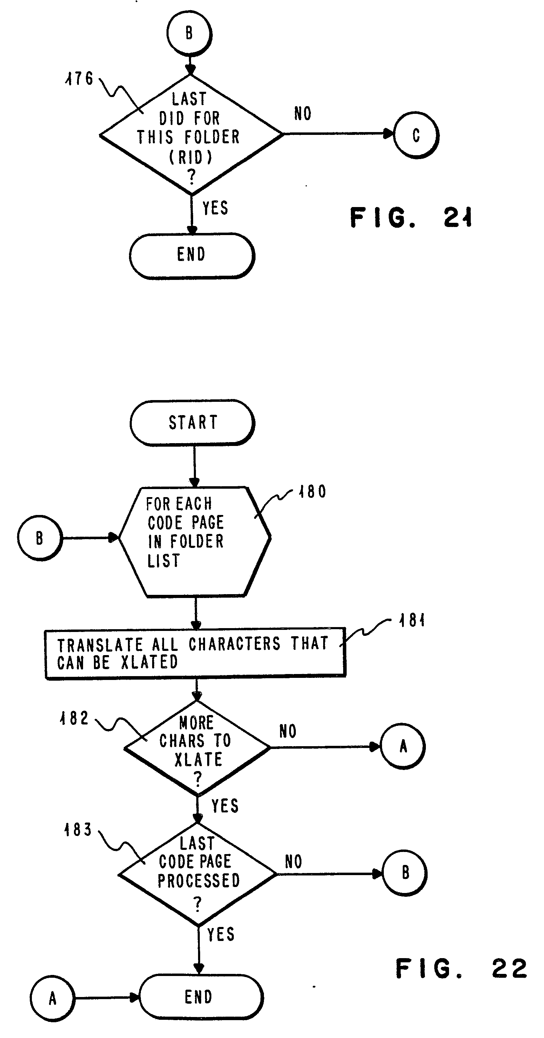

Referring to Fig. 21, there is shown a flow chart for the character translation routine which is called by the library server 18. In steps 180 and 181, all characters in the folder list are translated into code pages. Steps 182 and 183 determine whether there are additional characters which can not be translated and if all code pages have been processed, respectively. Control is transferred from step 183 to step 180 if there are other code pages to be processed.

In summary, a method of ordering documents within a folder in an information processing system. An end user indicates the documents to be included in an existing folder or a folder to be created, any search criteria, access control information, the logical relationship of the documents and the identification of the end user and/or the principal. The system then locates the folder identified in the request or creates the folder and includes the specified documents therein in the order specified by the end user. If the logical relationship is not specified by the end user, the system arranges the documents within the folder using various descriptors associated with each of the documents to be included in the folder. Thereafter, when the folder can be requested, the documents will be transmitted therewith in the order established.

## Claims

1. A method of operating an electronic information processing system in which data is stored in the form of documents and in which documents are grouped into folders, each folder having first document ordering criteria associated therewith, comprising the step of:
causing said system to change said first ordering criteria to second ordering criteria associated with a selected folder.

2. A method according to claim 1 including the further steps of:
generating a document for filing in the system: and
positioning the generated document in said selected folder in accordance with said second ordering criteria.

3. A method according to claim 1 or claim 2 in which said ordering criteria are based on addressable storage locations in the system assigned to said folders.

4. A method according to claim 3 in which said ordering criteria are based on descriptors which are associated with each of said documents.

5. A method of operating an electronic information processing system in which data is stored in the form of documents and the documents are grouped into folders, comprising the steps of:
selecting a group of documents for inclusion in a folder in accordance with first criteria; and
storing the selected documents in a folder in accordance with second criteria.

FIG. 1

FIG. 2.

| PARAMETER | OCCURRENCE | | | |
|---|---|---|---|---|
| ATTRIBUTE PARAMETER SET | REQUIRED | | | |
| FOLDER PARAMETER SET | CONDITIONAL | | | |
| DIF PARAMETER SET | CONDITIONAL | | | |

## F I G. 3

| PARAMETER | OCCURRENCE | MODIFY | SYSTEM | |
|---|---|---|---|---|
| FOLDER ATTRIBUTE | REQUIRED | NO | SET | |
| DIF ATTRIBUTE | REQUIRED | NO | SET | |
| FOLDER - ONLY ATTRIBUTE | REQUIRED | YES | — | |

## F I G. 4

| PARAMETER | OCCURRENCE | MODIFY | SYSTEM | |
|---|---|---|---|---|
| ATTRIBUTES | REQUIRED | SET | — | |
| SEQUENCE | REQUIRED | SET | — | |
| ENTERED DOCUMENT | CONDITIONAL | — | SET | |

## F I G. 5

| PARAMETER | OCCURRENCE | OWNER | SYSTEM | |
|-----------|-----------|-------|--------|---|
| LADN | CONDITIONAL | — | SET | |
| DOCUMENT NAME | CONDITIONAL | — | SET | |
| ENTER DATE TIME | CONDITIONAL | — | SET | |

**FIG. 6**

| PREFIX | FILE COMMAND | DOC. UNIT 1 | DOC. UNIT 2 | SUFFIX |
|--------|--------------|-------------|-------------|--------|

| ACCESS |
|--------|
| SEARCH |
| IDD 1 |
| IDD 2 |

| DRO |
|-----|
| IDP |
| CONTENT |

| DRO |
|-----|
| IDP |
| CONTENT |

**FIG. 7**

**FIG. 8**

START

100 — INTERFACE TO ROUTINE TO GET FILE OR ENTER REQUEST

SET ACCESS, IDS SEARCH PARMS — 101

D → FOR EACH DOCUMENT EXPLICITLY IDENTIFIED — 102

103 — IS DOC IN LIBRARY ?

NO

YES

COPY DOCUMENT AND RELATED OBJECTS, PARMS — 104

SET LIBRARY ADDRESS — 106

COPIED DOCUMENT — 105

A

A

107

```
IS
THE DOCU-
MENT A FOLDER          NO
?
```

YES

108

SET FOLDER ORDER CRITERIA AND OTHER ATTRI-
BUTES  FTQC DATA AREA

109

SET DID TO SPECIFIED VALUE

B

## FIG. 9

B

110

```
IS
DOC IN A
FOLDER             NO
?
```

YES

111

SET RIDS AND POS AS SPECIFIED

112

```
IS
THIS LAST
EXPLICIT          NO                    D
DOC
?
```

YES

113

SEND COMPLETED REQUEST TO LIBRARY SERVER

END

## FIG. 10

START

ROUTINE TO BUILD DID/
LADN AND RID/DID TABLES — 125

C → FOR EACH FOLDER
(RID) IN THE RID/
DID TABLE — 126

**FIG. 11**

GET ORDERING INFO FOR THIS FOLDER — 127

A

A

128
IS
FOLDER
POSITION
ORDERED
? → NO

129 YES
ROUTINE TO ORDER BY
POSITION

130
ROUTINE TO ORDER BY
DESCRIPTORS

131
IS
THIS LAST
FOLDER (RID)
IN TABLE
? → NO → C

**FIG. 12**

YES

END

START

SET OPN TO 1 — 140

B → FOR EACH DID IN THE COMMAND — 141

FIG. 13

142 — IS THE DOC IN LIB ?

NO → COPY DOCUMENT AND RELATED OBJECTS INTO THE LIBRARY  143

YES

GET LADN

145

ASSIGN A LADN  144

A

---

A

C → FOR EACH FOLDER (RID) REFERENCED BY THIS DOCU- MENT — 146

147 — NEED TO MAKE AN ENTRY FOR THIS RID ?

NO →

YES

MAKE AN ENTRY IN THE RID/DID TABLE FOR THIS RID — 148

FIG. 14

D

D

SET DID IN THE RID/DID TABLE — 149

150 — POS SET ? —— NO

YES

SET POS TO VALUE SPECIFIED
152

SET POS TO 1 + HIGHEST VALUE
154

SET OPN IN THE RID/DID TABLE
153

**FIG. 15**

E

E

154 — LAST FOLDER PROCESSED ? —— NO —— C

YES

SET OPN TO OPN + 1 — 155

**FIG. 16**

156 — LAST DID PROCESSED ? —— NO —— B

YES

END

START

SORT EACH RID ENTRY SO THAT
DIDS ARE IN ORDER BY POS
THEN BY OPN                    ~160

**FIG. 17**

G → FOR EACH DID TO
BE PLACED IN THIS
FOLDER (RID)              ~161

162 ~ IS
THERE AN-
OTHER DOCUMENT        NO → B
AT THIS
POS
?

YES

A

163 ~        A                              B        165
MOVE DOCUMENTS AT AND AFTER          PLACE THE DOC AT THE END
POS DOWN ONE POSITION EACH           OF THE FOLDER

PLACE THE DOC IN THE POS SPECIFIED   ~164

166 ~ LAST
DID PRO-        NO → D
CESSED
?

YES                                  **FIG. 18**

END

START

FOR EACH
DID FOR THIS
FOLDER (RID) ~170

C

**FIG. 19**

171 ~ ARE
THERE OTHER
DOCS IN THE
FOLDER
?

NO

172

PLACE DOC FIRST IN THE FOLDER

YES

A

B

A

173

DOC
HAS UNIQUE
FOLDER
DESCR
?

NO

YES

SET THIS DOC AMONG OTHERS
ACCORDING TO FOLDER ORDER-
ING

SET THIS DOCUMENT AFTER
LAST DOC WITH SAME
DESCRIPT

174

175

B

**FIG. 20**

B

176

LAST
DID FOR
THIS FOLDER
(RID)
?

NO → C

YES

END

FIG. 21

START

B →

FOR EACH
CODE PAGE
IN FOLDER
LIST

180

TRANSLATE ALL CHARACTERS THAT
CAN BE XLATED

181

182

MORE
CHARS TO
XLATE
?

NO → A

YES

183

LAST
CODE PAGE
PROCESSED
?

NO → B

YES

A →

END

FIG. 22